Europäisches Patentamt

European Patent Office

Office européen des brevets

(19)

(11) Veröffentlichungsnummer: **0 009 700**
**B1**

(12) **EUROPÄISCHE PATENTSCHRIFT**

(45) Veröffentlichungstag der Patentschrift:
15.07.81

(51) Int. Cl.³: **C 07 C 118/02, C 07 C 119/048**

(21) Anmeldenummer: **79103470.5**

(22) Anmeldetag: **17.09.79**

(54) **Verfahren zur Herstellung von 1-Isocyanato-anthrachinonen.**

(30) Priorität: **29.09.78 DE 2842539**

(43) Veröffentlichungstag der Anmeldung:
**16.04.80 Patentblatt 80/8**

(45) Bekanntmachung des Hinweises auf die Patenterteilung:
**15.07.81 Patentblatt 81/28**

(84) Benannte Vertragsstaaten:
**CH DE FR GB**

(56) Entgegenhaltungen:
**DE-C-224 490**
**GB-A-1 350 335**
**US-A-3 993 677**

(73) Patentinhaber: **BAYER AG, Zentralbereich Patente, Marken und Lizenzen, D-5090 Leverkusen 1, Bayerwerk (DE)**

(72) Erfinder: **Braden, Rudolf, Dr., Nothauser Feld 1, D-5068 Odenthal-Scheuren (DE)**
Erfinder: **Neeff, Rütger, Dr., Berta-von-Suttner-Strasse 22, D-5090 Leverkusen (DE)**

ACTORUM AG.

Verfahren zur Herstellung von 1-Isocyanato-anthrachinonen

Während die 2-Isocyanato-anthrachinone bereits seit langem bekannt sind, ist es bisher nicht gelungen, 1-Isocyanato-anthrachinone herzustellen, obwohl es an Versuchen, die 1-Amino-anthrachinone in die entsprechenden Isocyanate zu überführen, nicht gefehlt hat. Dabei wurden bisher jedoch nur undefinierbare Umwandlungsprodukte erhalten, so dass bereits die Überzeugung geäussert wurde, dass «α-Amino-anthrachinon überhaupt kein Isocyanat liefert» (DP-PS 2 244 90); dieser Meinung wurde bisher nicht widersprochen.

Überraschenderweise wurde nun gefunden, dass man 1-Isocyanato-anthrachinone erhält, wenn man die entsprechenden 1-Amino-anthrachinone, die durch in der Chemie der Anthrachinone übliche, nichtionische und gegenüber Phosgen inerte Substituenten substituiert sein können, in eine Lösung von Phosgen in einem inerten Lösungsmittel bei −10 bis +50°C einträgt, das Reaktionsgemisch unter Durchleiten von Phosgen auf 100 bis 200°C erhitzt und anschliessend mit einem inerten, unter den Reaktionsbedingungen gasförmigen Medium Phosgen und Chlorwasserstoff aus dem Reaktionsgemisch austreibt.

Geeignete Substituenten im Anthrachinonkern sind: $C_1$-bis $C_{12}$-Alkyl-, $C_1$-bis $C_4$-Alkoxy-, $CF_3$-, CN-, Cycloalkyl-, Acyl-, Aryl-, Aralkyl- und Nitrogruppen sowie Halogenatome.

Geeignete Cycloalkylreste sind beispielsweise Cyclopentyl, Cyclohexyl und Methylcyclohexyl.

Geeignete Aralkylreste sind beispielsweise Benzyl und Phenyläthyl.

Geeignete Arylreste sind Phenylreste, die durch $C_1$-$C_4$-Alkyl, $C_1$-$C_4$-Alkoxy, Halogen oder $NO_2$ substituiert sein können.

Geeignete Halogenatome sind F, Br und vor allem Cl.

Geeignete Acylgruppen sind Alkylcarbonyl oder Arylcarbonyl, wie Acetyl bzw. Benzoyl.

Als Ausgangsverbindungen zur Herstellung von 1-Isocyanato-anthrachinon kommen in Betracht:
1-Amino-, 1-Amino-2-methyl-, 1-Amino-2-chlor-,
1-Amino-4-chlor-, 1-Amino-5-nitro-,
1-Amino-2-nitro-, 1-Amino-4-nitro,
1-Amino-6-chlor-, 1-Amino-7-chlor-,
1-Amino-5-chlor-, 1-Amino-4-brom-,
1-Amino-2-benzoyl-, 1-Amino-2-benzyl-,
1-Amino-2-bromo-, 1-Amino-4-bromo-,
1-Amino-4-bromo-2-(p-chlorbenzoyl)-,
1-Amino-4-bromo-2(chloromethyl)-,
1-Amino-4-bromo-2-cyclohexyl-,
1-Amino-2-(bromomethyl)-,
1-Amino-4-bromo-2-octyl-, 1-Amino-2-chloro-,
1-Amino-4-chloro-, 1-Amino-2-(p-chlorbenzoyl)-,
1-Amino-4-chloro-2-cyclohexyl-,
1-Amino-2-(chloromethyl)-,
1-Amino-4-chloro-2-methyl-,
1-Amino-4-chloro-5-nitro-,
1-Amino-2-cyclo-hexyl-, 1-Amino-2,4-dibromo-,
1-Amino-2.4-dibromo-6-chloro-,
1-Amino-2.4-dibromo-6.7-dichloro-,
1-Amino-6.8-dibromo-2-methyl-,
1-Amino-2.4-dibromo-6-methyl-5-nitro-,
1-Amino-2,4-dichloro-, 1-Amino-4.5-dichloro-,
1-Amino-6.7-dichloro-, 4-Amino-1.5-dichloro,
1-Amino-2,6-difluoro-, 1-Amino-6.7-difluoro-,
1-Amino-2-fluoro-, 1-Amino-6-fluoro-,
1-Amino-2-hexyl-, 1-Amino-2-äthyl-,
1-Amino-2-nitro-, 1-Amino-2-nonyl-,
1-Amino-2-propyl-, 1-Amino-4.5.8-trichloro-,
1-Amino-4.5.8-trichloro-2-nitro-,
1-Amino-2.3.4-trifluoro-, 1-Amino-2-benzoyl-,
1-Amino-3-methyl-,
1-Amino-2.4.5.8-tetrachlor-anthrachinon.
Die bevorzugte Variante des Verfahrens ist dadurch gekennzeichnet, dass in einem inerten Lösungsmittel Phosgen gelöst wird und bei 10 bis 30°C in die Phosgenlösung das 1-Amino-anthrachinon eingetragen wird und das resultierende Gemisch zur Zersetzung des Carbamidchlorids auf 150 bis 185°C, zunächst in einem Phosgenstrom und dann in einem gasförmigen Strom eines inerten Mediums erhitzt wird, bis das Reaktionsgemisch chloridfrei ist.

Als inerte Lösungsmittel können beispielsweise aliphatische und aromatische Kohlenwasserstoffe mit wenigstens 6 C-Atomen, chlorierte Kohlenwasserstoffe, Nitroaromaten, Sulfolan und Diäthylcarbonat verwendet werden.

Besonders geeignet sind chlorierte aromatische Kohlenwasserstoffe und Nitroaromaten, wie Chlor-, Dichlor- und Nitrobenzol.

Das Gewichtsverhältnis des insgesamt verwendeten Lösungsmittels zu dem 1-Amino-anthrachinon soll wenigstens 3:1 und vorzugsweise 10 bis 100:1 betragen. Es ist auch möglich, die Reaktion in einer Kesselkaskade, mehreren Verweilzeitrohren kontinuierlich durchzuführen und das Lösungsmittel im Kreis zu fahren. Das Molverhältnis Phosgen zu dem 1-Amino-anthrachinon soll beim Einbringen des 1-Amino-anthrachinons wenigstens 3:1, vorzugsweise grösser als 5:1 sein. Das Molverhältnis Phosgen zu dem 1-Amino-anthrachinon, das insgesamt eingesetzt wird, soll 2 bis 15:1 sein.

Die Phosgenlösung kann durch Einleiten von gasförmigem Phosgen in das gegebenenfalls gekühlte Lösungsmittel unter Rühren oder Schütteln hergestellt werden. Es kann vorteilhaft sein, die Lösung unter Druck mit flüssigem Phosgen herzustellen. Das 1-Amino-anthrachinon kann in gelöster Form oder als Feststoff in die Phosgenlösung eingetragen werden. Besonders günstig ist es, eine Suspension des 1-Amino-anthrachinons in einem der genannten inerten Lösungsmittel in die Phosgenlösung einzutragen, wobei man bevorzugt Dichlor- oder Nitrobenzol verwendet.

Es kann vorteilhaft sein, die Reaktion unter Druck durchzuführen. Dabei kann der Eigendruck der Komponenten zur Anwendung kommen. Es ist jedoch auch möglich, mit einem inerten Gas einen Überdruck bis zu 100 bar, insbesondere bis zu 50 bar, einzustellen.

In einer speziellen Ausführungsform des Verfahrens wird die Umsetzung des 1-Amino-anthrachinons mit Phosgen unter Überdruck durchgeführt, wobei der entstehende Chlorwasserstoff über einen Kühler geführt und entspannt wird. Es ist auch möglich, die Umsetzung des 1-Amino-anthrachinons zunächst unter Überdruck durchzuführen und nachdem das 1-Amino-anthrachinon in die Phosgenlösung eingetragen ist, in dem Masse, in dem die Temperatur gesteigert wird, oder sofort den Überdruck durch Entspannen aufzuheben und die Reaktion im Temperaturbereich von 130 bis 200°C bei Normaldruck auszuführen.

Die Reaktion ist beendet, sobald kein Chlorid mehr im Reaktionsgemisch nachgewiesen wird.

Die Geschwindigkeit der Umsetzung hängt von der Temperatur und bei Verwendung eines 1-Amino-anthrachinons in fester Form von der Korngrösse ab. Bevorzugt verwendet wird ein Feststoff mit einer ungefähren Korngrösse $\leq 100$ µm.

Die Temperaturerhöhung auf 100 bis 200°C wird stets unter Durchleiten von Phosgen ausgeführt. Wenn die höchste Reaktionstemperatur erreicht ist – das kann beispielsweise der Siedepunkt des Lösungsmittels sein – wird der Phosgenstrom noch für 10 bis 20 Minuten, insbesondere 15 bis 100 Minuten, beibehalten, bevor der Phosgenstrom durch einen Inertgasstrom ersetzt wird.

Als Inertgase können beispielsweise verwendet werden: Stickstoff, Kohlendioxid, Kohlenmonoxid, Methan.

Die Isolierung des Isocyanates kann in einer der üblichen Weisen vorgenommen werden. So ist es z.B. möglich, das kristallisierte Isocyanat aus dem abgekühlten Reaktionsgemisch durch Filtration zu gewinnen. Es ist auch möglich, das Lösungsmittel abzudestillieren. Dabei ist es vorteilhaft, unter vermindertem Druck zu destillieren und Sumpftemperaturen bei der Destillation oberhalb 150°C, insbesondere oberhalb 120°C zu vermeiden.

Die neuen 1-Isocyanato-anthrachinone sind wertvolle Zwischenprodukte zur Herstellung von Farbstoffen.

So kann man z.B. die Isocyanatgruppe mit Aminen umsetzen und auf diese Weise Anthrachinonfarbstoffe mit Harnstoffgruppierungen herstellen, wie sie beispielsweise in der DE-OS 14 59 741 (= BE-PS 688 149) beschrieben sind.

Beispiel 1
1-Isocyanato-anthrachinon
200 g Phosgen werden bei 5°C in 650 g o-Dichlorbenzol gelöst. Im Verlaufe von 90 Minuten wird eine heisse Lösung von 44,6 g ($\approx 0,2$ Mol) 1-Amino-anthrachinon in o-Dichlorbenzol zu der Phosgenlösung zugetropft. Dabei lässt man die Temperatur in dem Reaktionsgemisch bis auf 25°C langsam ansteigen und leitet fortwährend einen Phosgenstrom durch das Reaktionsgemisch. Ein gelbes Produkt fällt aus. Anschliessend wird in weiteren 90 Minuten unter Durchleiten eines Phosgenstromes auf 175°C erhitzt, wobei eine klare Lösung entsteht. Nach 40 Minuten bei 175°C wird der Phosgenstrom unterbrochen und Stickstoff durch das Reaktionsgemisch geleitet. Nach weiteren 60 Minuten wird abgekühlt und ab 120°C das Lösungsmittel unter vermindertem Druck abdestilliert. Der verbleibende kristalline Rückstand (53 g, enthält noch geringe Anteile o-Dichlorbenzol) besteht zu 92.1% aus 1-Isocyanato-anthrachinon (NCO-Titration nach Houben-Weyl, Bd. 2 (1953), S. 557), das entspricht einer Ausbeute von 98%.

$C_{15}H_7NO_3$

| | | | |
|---|---|---|---|
| ber.: | 72,29% C | 2,83% H | 5,62% N |
| gef.: | 72,2 72,3 | 2,7 2,8 | 5,5 5,6 |

Fp. 180 – 200°C (unter Zersetzung)
Das Massenspektrum zeigt peaks bei 249, 221, 193, 165 und 164.
Das IR-Spektrum weist die NCO-Bande bei 2070 cm$^{-1}$ und keine Bande bei 1700 bis 1800 cm$^{-1}$ ($-$COCl) auf.

Beispiel 2
1-Isocyanato-5-nitro-anthrachinon
Bei 5 bis 10°C wurde eine Lösung von 100 g Phosgen in 250 g o-Dichlorbenzol hergestellt. Eine Suspension von 26,8 g 1-Amino-5-nitro-anthrachinon in 150 g o-Dichlorbenzol wurde bei 10°C unter Rühren eingegeben. Unter Durchleiten eines schwachen Phosgenstromes wurde das Gemisch 7 Stunden bei 10 bis 20°C gerührt. Die anfangs rote Färbung der Suspension war bereits nach etwa 3 Stunden nach gelb umgeschlagen. Das Reaktionsgemisch wurde in 2 Stunden auf 175°C erhitzt und unter Durchleiten von Phosgen 2 Stunden bei dieser Temperatur gerührt. Dann wurde 1 Stunde Stickstoff zum Austreiben des restlichen Phosgens bei 175°C durchgeblasen und abgekühlt. Nach dem Abdestillieren des Lösungsmittels bei 60 bis 80°C unter vermindertem Druck verblieben 29 g kristalliner Rückstand 1-Isocyanato-5-nitro-anthrachinon,

Fp. 150 bis 153°C.
$C_{15}H_6N_2O_5$, MG 294,2.

Der Gehalt an Isocyanat war nach der NCO-Titration (vgl. Beispiel 1) 99,9%.

Elementaranalyse:

| | | | |
|---|---|---|---|
| ber.: | 61,23% C | 2,06% H | 9,52% N |
| gef.: | 61,4 61,3 | 1,8 1,9 | 9,3 9,3 |

Das IR-Spektrum zeigt die NCO-Bande bei 2260 cm$^{-1}$.

Beispiel 3
1-Isocyanato-2-methyl-anthrachinon
35,5 g 1-Amino-2-methyl-anthrachinon wurden analog Beispiel 1 mit Phosgen umgesetzt. Erhalten wurde ein dunkles Festprodukt (47,2 g), das nach der Isocyanotitration 59 Gew.-% 1-Isocyanato-2-methyl-anthrachinon enthielt, das entspricht einer Ausbeute von 71%. Das 1-Isocyanato-2-methyl-antrachinon zersetzt sich beim Erhitzen.

### Beispiel 4

1-Isocyanato-chlor-anthrachinone
25,7 g 1-Amino-4-chlor-anthrachinon wurden in 2000 g o-Dichlorbenzol analog Beispiel 1 mit Phosgen umgesetzt. 28 g eines Festproduktes wurden erhalten, das sich bei ca. 250°C unter Dunkelfärben zersetzt, ohne zu schmelzen.

Isocyanatogehalt (nach NCO-Titration): 73,2 %.

Ebenso wurde ein Gemisch aus 1-Amino-6-chlor- und 1-Amino-7-chlor-anthrachinon mit Phosgen umgesetzt. Erhalten wurden 32 g 1-Isocyanato-x-chlor-anthrachinon mit einem Isocyanatogehalt von 75,2 %. Die Ausbeute betrug 84 %. Dieses Isocyanat schmilzt unter Zersetzung bei ca. 160°C. Das IR-Spektrum zeigt die NCO-Bande bei 2250 cm$^{-1}$.

### Beispiel 5

Wird anstelle von 1-Amino-5-nitroanthrachinon die gleiche Menge an 1-Amino-8-nitroanthrachinon (Reinheit 93%) eingesetzt und wie in Beispiel 2 verfahren, so erhält man in 92 % Ausbeute ein 1-Isocyanato-8-nitroanthrachinon in 91%iger Reinheit (nach NCO-Titration). Fp. 224°C.

### Patentansprüche

1. Verfahren zur Herstellung von 1-Isocyanatoanthrachinon, das in der Chemie der Anthrachinone übliche, nichtionische und gegenüber Phosgen inerte Substituenten enthalten kann, dadurch gekennzeichnet, dass man entsprechende 1-Amino-anthrachinone in eine Lösung von Phosgen in einem inerten Lösungsmittel bei −10 bis +50°C einträgt, das Reaktionsgemisch unter Durchleiten von Phosgen auf 100 bis 200°C erhitzt und anschliessend mit einem inerten, unter den Reaktionsbedingungen gasförmigen Medium Phosgen und Chlorwasserstoff aus dem Reaktionsgemisch austreibt.

2. Verfahren nach Anspruch 1, dadurch gekennzeichnet, dass die Phosgen-Umsetzung bei 10 bis 30°C und die Erhitzung des Reaktionsgemisches bei 150 bis 185°C durchgeführt wird.

3. Verfahren nach Anspruch 1 oder 2, dadurch gekennzeichnet, dass das Gewichtsverhältnis von Lösungsmittel zu 1-Amino-anthrachinon 10 bis 100:1 beträgt.

### Revendications

1. Procédé de préparation d'une 1-isocyanato-anthraquinone pouvant porter les substituants usuels, non ioniques et inertes à l'égard du phosgène, dans la chimie des anthraquinones, caractérisé en ce que l'on introduit les 1-amino-anthraquinones correspondantes dans une solution de phosgène dans un solvant inerte à une température de −10 à +50°C, on chauffe le mélange de réaction à une température de 100 à 200°C sous barbotage de phosgène puis on élimine le phosgène et le chlorure d'hydrogène du mélange de réaction à l'aide d'un agent inerte gazeux dans les conditions de la réaction.

2. Procédé selon la revendication 1, caractérisé en ce que la réaction avec le phosgène est effectuée à une température de 10 à 30°C et le mélange de réaction est chauffé à une température de 150 à 185°C.

3. Procédé selon la revendication 1 ou 2, caractérisé en ce que les proportions relatives en poids entre le solvant et la 1-amino-anthraquinone vont de 10 à 100:1.

### Claims

1. Process for the preparation of 1-isocyanato-anthraquinone which can contain non-ionic substituents which are customary in the chemistry of anthraquinones and inert towards phosgene, characterised in that corresponding 1-amino-anthraquinones are introduced into a solution of phosgene in an inert solvent at −10 to +50°C, the reaction mixture is heated to 100 to 200°C, whilst passing phosgene through it, and phosgene and hydrogen chloride are then expelled from the reaction mixture with an inert medium which is gaseous under the reaction conditions.

2. Process according to claim 1, characterised in that the reaction with phosgene is carried out at 10 to 30°C and the reaction mixture is heated at 150 to 185°C.

3. Process according to Claim 1 or 2, characterised in that the weight ratio of solvent to 1-amino-anthraquinone is 10 to 100:1.